# FASCICULE DE BREVET EUROPEEN

(11) **EP 1 695 523 B1**
(45) Date de publication et mention de la délivrance du brevet: **15.08.2007**
(21) Numéro de dépôt: 04805642.8
(22) Date de dépôt: 03.12.2004
(51) Int. Cl.: H04L 29/12, H04L 29/14

(54) **Procédé et dispositif d'émission de requêtes vers un serveur de noms de domaine depuis une machine requérante**
Verfahren und Vorrichtung zum Senden von Abfragen von einer abfragenden Maschine zu einem Domänennamenserver
Method and device for transmitting requests from a requesting machine to a domain name server

(30) Priorité: 19.12.2003 FR 0315015
(43) Date de publication de la demande: 30.08.2006
(73) Titulaire: FRANCE TELECOM, 75015 Paris (FR)
(72) Inventeur: MIGAULT, Daniel, F-92130 Issy Les Moulineaux (FR); FOUQUART, Philippe, F-75015 Paris (FR)
(74) Mandataire: Desormiere, Pierre-Louis
(86) Numéro de dépôt international: PCT/FR2004/003123
(87) Numéro de publication internationale: WO 2005/069581

(56) Documents cités:
- WO-A-01/13259
- WO-A-02/15051
- WO-A-02/19649
- WO-A-97/25849
- WO-A-97/31490
- FALTSTROM P: "E.164 number and DNS" REQUEST FOR COMMENTS 2916, septembre 2000 (2000-09), pages 1-10, XP002291742 cité dans la demande
- RTR-GMBH: "RAHMENBEDINGUNGEN DER RTR-GMBH FÜR DEN ENUM FIELD TRIAL IN ÖSTERREICH VERSION V 1.0"[Online] novembre 2002 (2002-11), XP002291741 Extrait de l'Internet: URL:http://www.rtr.at/web.nsf/lookuid/5AAE 80558D137482C1256E620061BCD1/$file/RTR%20R ahmenbedingungen%20V%201.0.pdf> [extrait le 2004-08-09]

## Description

L'invention concerne un procédé d'émission d'au moins une requête à destination d'un serveur de noms de domaine depuis une machine requérante.

Les serveurs de noms de domaine (DNS en anglais), plus particulièrement concernés par l'invention, sont les serveurs de noms de domaine reproduisant la numérotation téléphonique tels que e164.arpa.

Dans ces serveurs, chaque nom est déterminé à partir du numéro de téléphone de destination au format E.164, contenu dans la requête issue de la machine requérante. Chaque serveur de noms de domaine comporte des enregistrements en mémoire, associés aux noms et aux zones qu'il gère, et/ou des références à d'autres serveurs de noms de domaine, pour les noms et les zones qu'il ne gère pas.

Selon le protocole ENUM, lorsqu'un message de requête en lecture d'un nom parvient à un serveur gérant la zone pouvant contenir ce nom, celui-ci retourne à la machine requérante les enregistrements, qui sont associés à ce nom et qui sont constitués d'identifiants de ressource (URI en anglais) comme par exemple un numéro de fax, un numéro de téléphone mobile, une adresse de courriel.

Ainsi, les serveurs de noms peuvent être soumis à de nombreuses requêtes en lecture ou écriture, y compris à des requêtes erronées, pour lesquelles le nom est inexistant dans les serveurs de noms de domaine.

Dans le cas d'une requête pour un nom de domaine inconnu, le serveur de noms de domaine peut ne pas répondre à la machine requérante dans certains cas. L'inexistence du nom demandé ne peut alors être détectée que par le dépassement d'un délai de temporisation après l'émission de la requête sur la machine requérante, alors qu'aucune réponse n'a été reçue. En outre, le traitement de requêtes erronées surcharge et retarde également celui des requêtes non erronées dans les serveurs de noms, qui appellent bien une réponse.

L'invention vise à obtenir un procédé et un dispositif d'émission de requêtes vers un serveur de noms de domaine, palliant les inconvénients de l'état de la technique et permettant de diminuer le nombre de requêtes erronées que doivent traiter les serveurs de noms de domaine.

A cet effet, un premier objet de l'invention est un procédé d'émission d'au moins une requête à destination d'un serveur de noms de domaine depuis une machine requérante selon la revendication 1.

Grâce à l'invention, le recours aux serveurs de noms de domaine est rendu plus limité et on leur épargne des traitements inutiles. On reconnaît une requête erronée et on l'empêche d'atteindre les serveurs de noms depuis la machine requérante, et ce par le fait que le numéro de téléphone de destination de la requête a été déterminé comme non valable, par exemple en déterminant qu'il est impossible qu'il existe.

Suivant d'autres caractéristiques de l'invention,
- dans la base de données locale est enregistré au moins un code de pays prescrit, et
   le contrôle préalable comprend de vérifier si le code de pays du numéro de téléphone de destination de la requête en est un enregistré dans la base de données locale ;
- dans la base locale de données de blocs de numéros de téléphone est enregistré au moins un plan de numérotation, chaque plan de numérotation comprenant au moins un bloc de numéros de téléphone,
   le contrôle préalable comprend de :
   déterminer, au cours d'une étape de détermination, si le numéro de téléphone de destination de la requête appartient à un bloc du plan de numérotation, le numéro de téléphone de destination de la requête ne passant pas avec succès ledit contrôle préalable dans la négative à l'étape de détermination ;
- le plan de numérotation est associé à un code de pays,
   le plan de numérotation correspondant au code de pays du numéro de téléphone de destination de la requête étant celui par rapport auquel le contrôle préalable est effectué ;
- une pluralité de blocs disjoints de numéros de téléphone, auxquels sont associées respectivement des caractéristiques prescrites de numéros du bloc, est enregistrée dans la base de données locale,
   ladite étape de détermination comprend en outre de déterminer, à quel bloc de numéros de téléphone de la base de données locale le numéro de téléphone de destination de la requête appartient,
   dans le cas où il a été déterminé que le numéro de téléphone de destination de la requête appartient à un bloc du plan de numérotation,
   lire dans la base de données locale les caractéristiques associées au bloc de numérotation déterminé,
   vérifier si le numéro de téléphone de destination de la requête est conforme auxdites caractéristiques lues,
   n'envoyer de la machine requérante au serveur de noms de domaine la requête que si la vérification donne un résultat affirmatif ;
- les caractéristiques de numéros de bloc sont au moins l'un parmi :
   une date de réservation des numéros de téléphone du bloc,
   une fin de période de réservation des numéros de téléphone du bloc,
   une date d'affectation des numéros de téléphone du bloc,
   une fin de période d'affectation des numéros de téléphone du bloc,
   une date de début d'attribution du bloc de numéros de téléphone,
   une date dé fin d'attribution du bloc de numéros de téléphone,
   une longueur maximum des numéros de téléphone du bloc,
   une longueur minimum des numéros de téléphone du bloc ;
- si le numéro de téléphone de destination de la requête ne passe pas avec succès ledit contrôle préalable, un signal d'erreur sur le numéro de téléphone de destination de la requête est renvoyé à la machine requérante ;
- le signal d'erreur sur le numéro de téléphone de destination de la requête contient une information sur la ou les caractéristique(s) de numéros de bloc, qui ne sont pas respectées par le numéro de téléphone de destination de la requête lors de ladite vérification.

Un deuxième objet de l'invention est un dispositif d'émission d'au moins une requête à destination d'un serveur de noms de domaine depuis une machine requérante selon la revendication 9.

Suivant une caractéristique de l'invention, les moyens de réception, la base de données de blocs de numéros de téléphone, les moyens de contrôle automatique et les moyens d'envoi sont présents sur la machine requérante.

Suivant une autre caractéristique de l'invention, les moyens de réception, les moyens de contrôle automatique et les moyens d'envoi sont présents sur la machine requérante et la base de données de numéros de téléphone est interrogeable par les moyens de contrôle automatique par l'intermédiaire d'un réseau local. L'invention comporte aussi une machine selon la revendication 12, un programme informatique selon la revendication 13 et un système selon la revendication 14.

L'invention sera mieux comprise à la lecture de la description qui va suivre, donnée uniquement à titre d'exemple non limitatif en référence aux dessins annexés, sur lesquels :
- la figure 1 représente schématiquement un dispositif d'émission de requêtes suivant l'invention à destination d'une architecture de serveurs de noms de domaine,
- la figure 2 représente schématiquement une variante du dispositif d'émission de requêtes suivant la figure 1,
- la figure 3 représente un exemple de l'organigramme du déroulement du procédé d'émission des requêtes mis en oeuvre par le dispositif suivant l'invention ;
- la figure 4 représente un exemple du contenu de la base de données utilisée suivant l'invention ; et
- la figure 5 représente deux exemples d'organigrammes des étapes de vérification effectuées dans le procédé suivant l'invention.

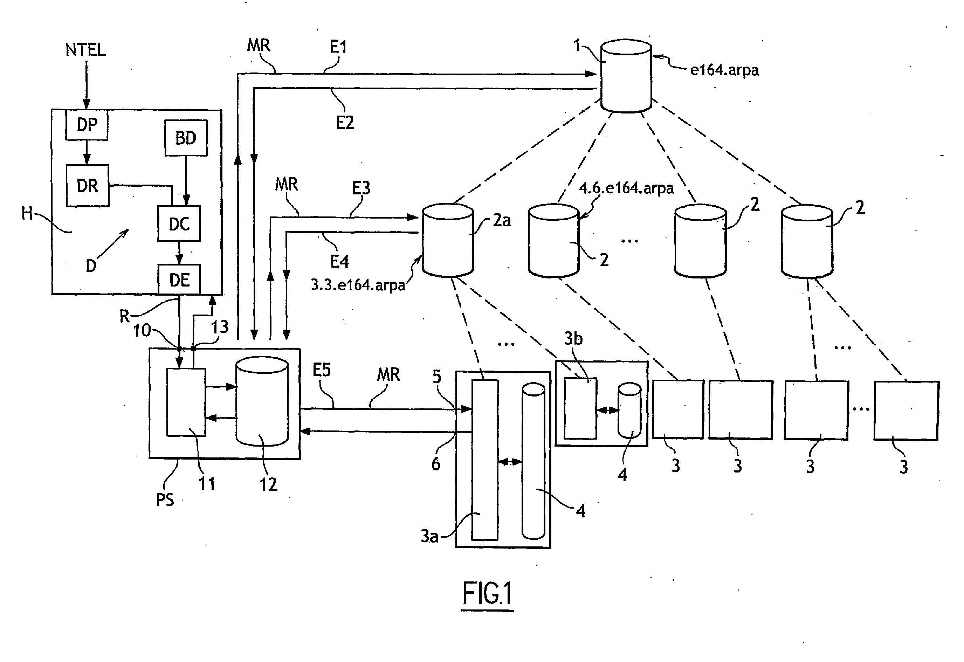

Dans le cas du domaine de numérotation téléphonique à la figure 1, les noms dans les serveurs 3 de noms de domaine utilisent les numéros de téléphone des utilisateurs selon le protocole ENUM du groupe de travail sur la mise en correspondance avec des numéros de téléphone (Telephone Number Mapping Working Group) défini au groupe de travail IETF (groupe de travail sur le réseau Internet, ou Internet Engineering Task Force) selon le document RFC2916, auquel il est fait référence ici, RFC signifiant en anglais « Request For Comments » et étant des publications de référence portant sur le réseau Internet. Selon ce document, intitulé « numéro E.164 et serveurs de noms de domaine » (E.164 Number and DNS), pour traduire un numéro de téléphone E.164 en nom de domaine, on enlève du numéro de téléphone E.164 d'un utilisateur, qui comprend le code du pays (par exemple +33-1-45295813 pour un numéro de téléphone d'un utilisateur en France) tous les caractères non numériques, on intercale des points entre les chiffres, on inverse l'ordre des chiffres et on ajoute la chaîne « e.164.arpa » à la fin des chiffres, pour obtenir le nom de domaine, c'est-à-dire 3.1.8.5.9.2.5.4.1.3.3.e164.arpa dans l'exemple précédent illustré aux figures 1, 2 et 3.

Au nom est associé dans la mémoire 4 associée audit serveur 3 de noms de domaine un ensemble d'enregistrements de ressource NAPTR (pour enregistrement de ressource de pointeur d'autorité de nommage ou Naming Authority Pointer Ressource Record) selon le document du groupe de travail IETF RFC2915, rendu caduc par le document RFC3403, auxquels il est fait référence ici. L'enregistrement NAPTR a, selon la partie 4 du document IETF RFC3403, un code de type de DNS égal à 35 pour le champ TYPE du format d'enregistrement de ressource selon le paragraphe 3.2.1 du document IETF RFC1035. L'enregistrement NAPTR a ainsi le format suivant :

### ORDRE, PREFERENCE, DRAPEAUX (FLAGS), SERVICES, REGEXP, REPLACEMENT.

Le champ REGEXP contient des informations I proprement dites, telles que des informations I pour joindre l'utilisateur, comme par exemple sip:dupont@ft.com, mailto:dupont@ft.com, http://www.exemple.fr, qui sont dans cet exemple d'autres informations pour joindre Monsieur Dupont ayant le numéro de téléphone +33-1-45295813 (format international pour le numéro 01 45 29 58 13 en France).

Ainsi, dans cet exemple, les enregistrements associés à ce nom de domaine seront :
$ORIGIN 3.1.8.5.9.2.5.4.1.3.3.e164.arpa
   IN NAPTR 10 10 "u" "E2U+sip" "!^.*$!sip:dupont@ft.com!"
   IN NAPTR 10 20 "u" "E2U+mailto" "!^.*$!mailto:dupont@ft.com!"
   IN NAPTR 10 20 "u" "E2U+http" "!^.*$!http://www.exemple.fr!"

En outre, le principe de délégation de l'architecture ENUM dans le contexte de la gestion de la numérotation E164 définit plusieurs niveaux de responsabilité en arborescence en ce sens qu'un premier serveur 1 (dénommé Tier0) de noms de domaine gère une racine mondiale d'adresses en « e.164.arpa », des deuxièmes serveurs 2, 2a (dénommés Tier1) de noms de domaine auxquels le premier serveur 1 renvoie gèrent chacun un code de pays (par exemple 6.4.e164.arpa pour la Suède, 3.3.e164.arpa pour la France métropolitaine), et des troisièmes serveurs 3, 3a, 3b (dénommés Tier2) de noms de domaine constituent alors les serveurs 3 de noms de domaine précités, gérant chacun leur zone associée de noms de domaine. A la figure 1, les renvois sont symbolisés par des traits interrompus. Chaque serveur 2, 2a de noms de domaine renvoie à un ou plusieurs serveurs 3, 3a, 3b de noms de domaine, auxquels ne renvoie pas les autres serveurs 2, 2a. Le serveur 1 est dit parent des serveurs 2, 2a, eux-mêmes parents des serveurs 3, 3a auxquels ils renvoient. Chaque serveur 3, 3a, 3b gère la zone associée à des numéros E164.

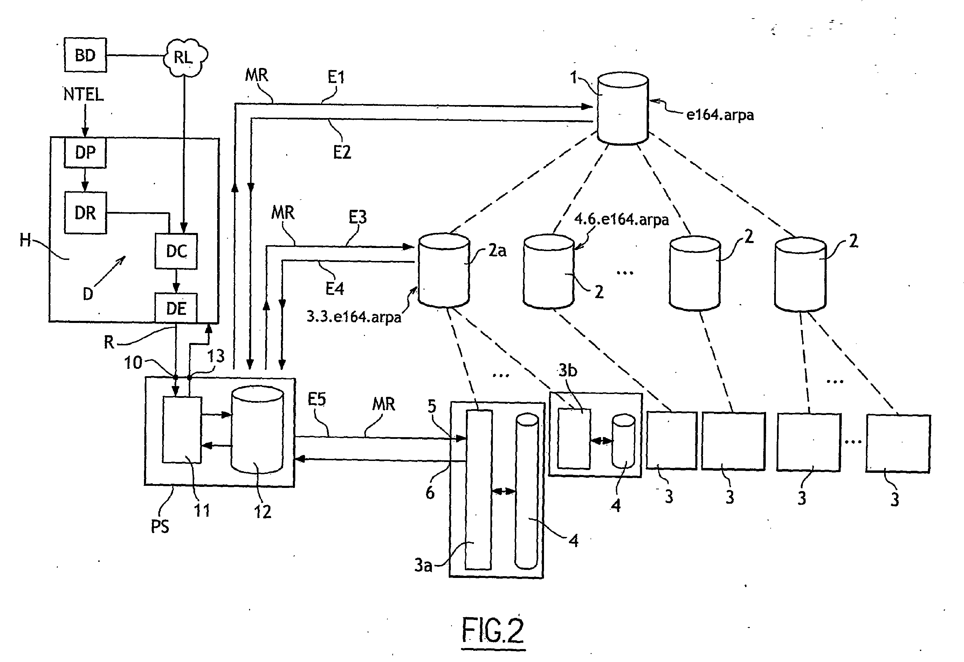

Dans l'exemple précédent, le serveur 2a de noms de domaine 3.3.e164.arpa renvoie à plusieurs serveurs 3a, 3b de noms de domaine. Le serveur 3a de noms de domaine gère par exemple un certain nombre d'adresses en 3.3.e164.arpa, comprenant par exemple l'adresse 3.1.8.5.9.2.5.4.1.3.3.e164.arpa et est associé à la mémoire 4 de la figure 2. Par exemple, le serveur 3a gère la zone se terminant par 9.2.5.4.1.3.3.e164.arpa, le serveur 3b gère une zone se terminant par 8.2.5.4.1.3.3.e164.arpa.

Une machine H souhaitant obtenir des informations I présentes dans un enregistrement ENR de l'architecture A envoie à une plate-forme de services, ayant le signe de référence PS aux figures 1 et 2, une requête R contenant un numéro NTEL de téléphoné E.164, permettant de déterminer le nom ADR de cet enregistrement ENR, et ce par traduction du numéro de téléphone NTEL ainsi qu'il a été expliqué ci-dessus. Cette machine H requérante est par exemple un ordinateur personnel d'un utilisateur. La plate-forme PS de services a par exemple une architecture client - serveur et comprend un accès 10 de réception des requêtes R depuis l'extérieur et émises par des machines H et un module 11 de résolution (resolver) pour le traitement des requêtes reçues sur l'accès 10. En fonction de l'architecture, la requête validée par le système peut être émise par un serveur DNS local sur le réseau du client requérant. Les requêtes en provenance de la plate-forme de services sont donc émises au niveau de ce réseau local. Le module 11 de résolution est client d'un serveur local (DNS local) de noms de domaine 12 connecté au module 11 et est apte à envoyer au serveur local de noms de domaine 12 connecté au module 11, des signaux d'interrogation correspondant à la requête R reçue sur l'accès 10. Le serveur local 12 de noms de domaine est apte à émettre, en fonction des signaux d'interrogation, des messages de requêtes MR en informations I vers les serveurs extérieurs 1, 2, 3 de noms de domaine de la manière suivante.

Les messages de requêtes MR comprennent le nom ADR du domaine à interroger dans l'architecture pour obtenir l'enregistrement ENR souhaité.

La requête R envoyée par la machine H à la plate-forme PS précise le numéro de téléphone E.164 souhaité NTEL, que la plate-forme PS (par exemple par le module 11 de résolution) traduit en nom ADR à interroger (par exemple ADR = 3.1.8.5.9.2.5.4.1.3.3.e164.arpa pour NTEL = +33-1-45295813), pour former le message MR correspondant.

Le message de requête MR comprenant le nom ADR est envoyé d'abord à l'étape E1 au serveur 1, lequel renvoie ensuite lors de l'étape E2 un premier message de réponse au serveur local 12, lui indiquant une référence au serveur 2 correspondant, sélectionné par cette adresse ADR, c'est-à-dire dans l'exemple précédent le serveur 2a. Le serveur local 12 envoie ensuite lors de l'étape E3 le message de requête MR comprenant le nom ADR au serveur 2 sélectionné et indiqué dans le premier message de réponse, c'est-à-dire dans l'exemple précédent au serveur 2a, lequel serveur 2a envoie ensuite, lors de l'étape E4, un deuxième message de réponse au serveur local 12, lui indiquant une référence au serveur 3 correspondant, sélectionné par ce nom ADR, c'est-à-dire dans l'exemple précédent le serveur 3a. Le serveur local 12 envoie ensuite lors de l'étape E5 le message de requête MR comprenant le nom ADR au serveur 3a de noms de domaine sélectionné et indiqué dans le deuxième message de réponse.

Chaque serveur 3, 3a, 3b comporte au moins une entrée 5 d'admission de messages de requêtes MR. Les messages de requêtes MR peuvent être par exemple des requêtes en lecture d'informations I au nom ADR ou des requêtes en écriture d'informations I au nom ADR.

Lorsqu'un message MR de requête en lecture au nom ADR parvient à l'entrée d'admission 5 et lorsque le nom ADR est trouvé dans le serveur 3, 3a, 3b, le ou les enregistrements NAPTR des informations I sont recherchés à ce nom ADR. Puis, lorsque les enregistrements NAPTR associés à ce nom ADR sont trouvés dans le serveur 3, 3a, 3b, ces enregistrements NAPTR sont lus dans la mémoire 4 associée, par exemple les enregistrements NAPTR indiqués ci-dessus pour le nom 3.1.8.5.9.2.5.4.1.3.3.e164.arpa. Le serveur 3, 3a, 3b comporte une première sortie 6 de fourniture d'un troisième message de réponse à la requête MR en lecture présente sur son entrée 5. Ce troisième message de réponse contient les enregistrements NAPTR lus dans la mémoire 4 associée au nom ADR spécifié dans le message MR de requête en lecture, comme ceux indiqués dans l'exemple mentionné ci-dessus, ayant les informations 1 = sip:dupont@ft.com, mailto:dupont@ft.com, http://www.exemple.fr pour le nom 3.1.8.5.9.2.5.4.1.3.3.e164.arpa. Le troisième message de réponse est envoyé à l'étape E6 de la sortie 6 du serveur 3a au serveur local 12 et de là à la machine requérante H via l'accès 13 de celui-ci.

Lorsqu'un message MR de requête en lecture au nom ADR parvient à l'entrée d'admission 5, lorsque le nom ADR est trouvé dans le serveur 3, 3a, 3b, lorsque le ou les enregistrements NAPTR des informations I sont recherchés à ce nom ADR mais qu'aucun enregistrement NAPTR n'est trouvé à ce nom ADR (parce qu'aucun enregistrement NAPTR n'est présent à ce nom ADR), le serveur 3 envoie sur sa sortie 6 au serveur local 12, et, de là à la machine requérante H, un message de réponse indiquant l'absence d'enregistrements NAPTR au nom ADR.

Lorsqu'un message MR de requête en lecture à un nom ADR erroné parvient à l'entrée d'admission 5, ce nom ADR ne pourra pas être trouvé dans le serveur 3, étant donné que le nom est inexistant dans les serveurs de noms de domaine. Pour diverse raisons (non disponibilité des serveurs ou surcharge, configurations des tables de routage), la durée de résolution du nom ADR peut être longue, durée pendant laquelle aucune réponse n'est transmise. Ainsi, le serveur local 12 ne recevra jamais de réponse au dernier message MR de requête qu'il leur aura fait parvenir.

Suivant l'invention, il est prévu, localement à la machine requérante H, un dispositif D d'émission de requêtes R destinées aux serveurs extérieurs 1, 2, 3 de noms de domaine, les serveurs 3 étant les serveurs dans lesquels sont présents les enregistrements NAPTR.

Ce qui a été décrit ci-dessus concernant les messages MR de requêtes en lecture vaut bien entendu pour les messages MR de requêtes en écriture, dans les serveurs 1, 2, 3, d'un enregistrement NAPTR spécifié dans la requête R au nom ADR spécifié dans la requête R.

Ce dispositif D d'émission comprend des moyens DR de réception de requêtes R depuis la machine requérante H et une base BD de données de numéros de téléphone. Des moyens DC de contrôle sont prévus dans le dispositif D d'émission pour contrôler automatiquement si le numéro de téléphone NTEL de destination de la requête R est valable par rapport aux données issues de la base BD de données de numéros de téléphone.

Des moyens DE sont prévus pour n'envoyer la requête R de la machine requérante H à destination du serveur 1, 2, 3 de noms de domaine que si le numéro NTEL de téléphone de destination de cette requête R passe avec succès le contrôle préalable des moyens DC. Les moyens DC de contrôle font par exemple partie d'une librairie de validation pouvant comporter également d'autres fonctions.

Le dispositif D d'émission est par exemple entièrement installé sur la machine requérante H, ainsi que cela est représenté à la figure 1, auquel cas les moyens DR de réception sont par exemple une interface de réception des requêtes R issues d'une interface DP, permettant à l'utilisateur de produire une ou plusieurs requêtes R sur la machine requérante H en composant sur celle-ci le numéro de téléphone NTEL de destination de cette ou ces requêtes R.

Dans la variante représentée à la figure 2, les moyens DR de réception, les moyens de DC contrôle automatique et les moyens DE d'envoi sont présents sur la machine requérante H comme précédemment, et la base BD de données de numéros de téléphone est interrogeable par les moyens DC de contrôle automatique par l'intermédiaire d'un réseau local RL. Dans cette variante, la base BD est par exemple présente au niveau du module 11 de résolution.

Si, lors du contrôle, le numéro NTEL de téléphone de destination de la requête R est déclaré non valable par comparaison aux données de la base BD, la requête R n'est pas transmise par les moyens DE de la machine requérante H au module 11 de résolution. Le contrôle de validité élimine donc des messages MR de requête, dont on sait a priori qu'ils ne peuvent pas avoir d'enregistrement NAPTR associé dans les serveurs extérieurs 1, 2, 3 de noms de domaine, étant donné que le numéro NTEL de téléphone de destination correspondant n'est pas valable. Par conséquent, aucun message de requête MR au nom ADR traduit de ce numéro NTEL de téléphone ne sera généré par le serveur local 12, ni envoyé par celui-ci aux serveurs extérieurs 1, 2, 3 de noms de domaines, qui seront donc débarrassés de messages MR de nom ADR erronés et de traitements inutiles de ces messages.

Les numéros NTEL de téléphone ont le format suivant :
CC C₁C₂C₃...Cₚ
où CC est le code de pays dans la numérotation internationale, (tel qu'attribué par l'Union Internationale des Télécommunications), à un, deux ou trois chiffres, (33 pour la France métropolitaine, 362 pour l'Ile de la Réunion, 44 pour le Royaume-Uni, 1 pour les Etats-Unis,...) et C₁C₂C₃...Cp est le numéro de téléphone NTEL dans le plan de numérotation national. Le code de pays peut être géographique ou non géographique. Dans l'exemple précédent, CC=33 et C₁C₂C₃...Cₚ = 145295813.

Par exemple, actuellement en France, p = 9 et C₁C₂C₃...Cₚ = Zabpqmcdu, avec Z=1, 2, 3, 4, 5, 6 ou 8, le 0 étant ajouté pour le numérotage depuis la France métropolitaine.

Le code de pays CC est présent explicitement dans le numéro NTEL en ayant été numéroté par l'utilisateur, ou, à défaut, est configuré implicitement pour être celui du pays où se trouve la machine requérante H ou est inséré par l'application.

Dans la base BD locale de données de numéros de téléphone est enregistré, dans un mode de réalisation, un ou plusieurs plans de numérotation nationaux, chacun associé au code du pays correspondant. Les moyens DC de contrôle effectuent le contrôle du numéro NTEL par rapport au code CC de pays (code de pays ou country code en anglais) rejette la requête R dans la négative (émission par exemple du message (4), (7) ou (8) décrit ci-dessous), ou, si il résulte de ce contrôle que le code CC du numéro NTEL est un des codes existants dans la base BD, effectuent le contrôle du numéro NTEL par rapport au plan de numérotation correspondant au code CC de pays du numéro NTEL de téléphone de destination de la requête R présente sur les moyens DR. Bien entendu, seul le contrôle du code CC du numéro NTEL pourrait être effectué selon l'invention, pour éliminer les requêtes basées sur des codes ne correspondant à aucun pays de code enregistré dans la base, (émission par exemple du message (4), (7) ou (8) décrit ci-dessous).

Chaque plan de numérotation comprend un ou plusieurs blocs BN de numéros de téléphone, pouvant être délimités dans l'exemple français précédent par un certain nombre des premiers chiffres des numéros de téléphone, tels que par la racine nationale Zabpq des numéros de téléphone, un numéro appartenant au bloc BN lorsque les premiers chiffres du numéro, sans le code CC, sont égaux à ceux du bloc BN. Toutefois, toute autre règle logique d'appartenance d'un numéro à un bloc peut être prévue, un numéro ne pouvant appartenir qu'à un seul bloc et les blocs d'un même plan de numérotation étant disjoints. Ainsi, un bloc désigne de manière générale une ressource du plan de numérotation et contient un ou plusieurs numéros de téléphone, qui ne se suivent pas nécessairement. Ainsi, le numéro 145295813 appartient au bloc BN = 14529 mais pas au bloc 10050.

Ces blocs sont affectés à l'un ou à l'autre des opérateurs de téléphonie.

Dans un mode de réalisation, des caractéristiques CAR prescrites de numéros de bloc sont associées à chaque bloc BN et sont enregistrées dans la base BD de données locale.

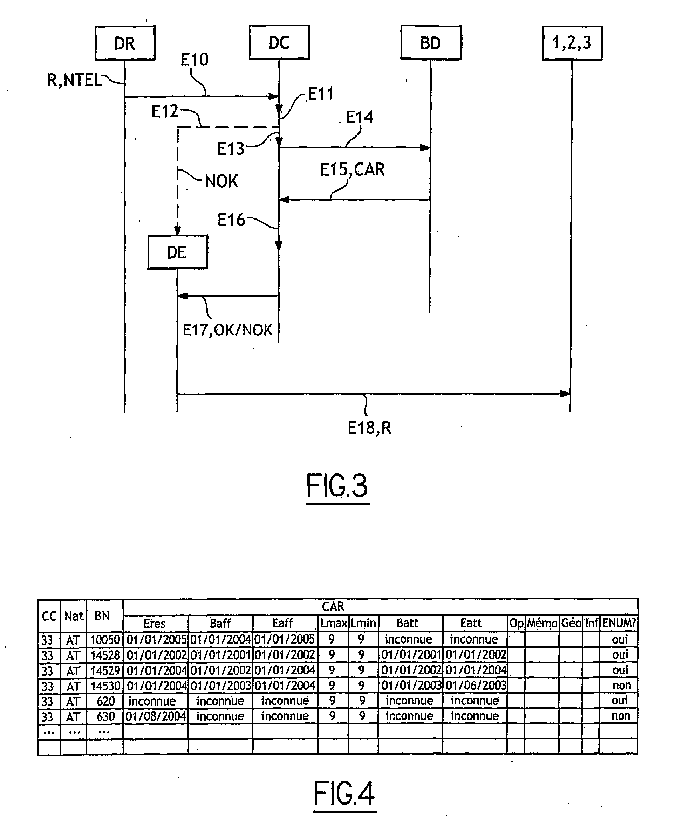

A la figure 3, le procédé d'émission suivant l'invention de déroule par exemple de la manière suivante.

Une requête R contenant le numéro NTEL de téléphone de destination est reçue à l'étape E10 sur les moyens DR de réception et est transmise aux moyens DC de contrôle.

On détermine ensuite à l'étape E11 par les moyens DC de contrôle, si le numéro de téléphone NTEL de destination de la requête R appartient à un des blocs BN du plan de numérotation national correspondant à celui-ci dans la base BD. Si il a été déterminé que le numéro de téléphone NTEL de destination de la requête R n'appartient à aucun bloc BN, alors ce numéro de téléphone NTEL ne passe pas avec succès le contrôle préalable, ce que les moyens DC de contrôle signalent aux moyens DE, à l'étape E12 représentée en traits interrompus à, la figure 3, par un message NOK de refus, qui fait que les moyens DE ne transmettent pas de requête R contenant ce numéro NTEL de téléphone de destination vers les serveurs extérieurs 1, 2, 3 de noms de domaine. Par conséquent, les moyens DE ne transmettent pas les requêtes R contenant un numéro NTEL de téléphone de destination n'appartenant à aucun bloc BN. Par exemple actuellement, aucun bloc BN ne commence par 7 en France (aucun numéro de téléphone en France ne commence par 07) et aucun numéro NTEL français commençant par 07 ne passera avec succès le contrôle exercé par les moyens DC.

Si il a été déterminé à l'étape E11 que le numéro NTEL de téléphone de destination de la requête R appartenait à un des blocs BN de la base BD, on détermine à l'étape E13 suivante dans les moyens DC de contrôle à quel bloc BN de la base BD le numéro NTEL de téléphone de destination de la requête R appartient.

Puis, au cours de l'étape E14 de lecture, on interroge automatiquement par les moyens DC la base BD de données locale sur les caractéristiques CAR associées au bloc BN de numéros déterminé, laquelle renvoie aux moyens DC à l'étape E15 suivante les caractéristiques CAR associées à ce bloc BN de numéros déterminé.

Les moyens DC vérifient ensuite à l'étape E16 si le numéro de téléphone NTEL de destination de la requête R est conforme auxdites caractéristiques CAR reçues de la base BD. Dans l'affirmative, les moyens DC de contrôle envoient à l'étape E17 suivante un message OK d'acceptation de la requête R aux moyens DE, ce message OK d'acceptation déclenchant l'émission de la requête R des moyens DE vers les serveurs extérieurs de noms de domaine 1, 2, 3 à l'étape E18 suivante. Dans la négative, les moyens DC de contrôle envoient à l'étape E17 suivante le message NOK de refus de la requête R aux moyens DE, ce message NOK de refus empêchant l'émission de la requête R des moyens DE vers les serveurs extérieurs de noms de domaine 1, 2, 3. Les moyens DE n'envoient donc de la machine requérante H au serveur extérieur 1, 2, 3 de noms de domaine la requête R que si les moyens DC ont établi que le numéro de téléphone NTEL de destination de la requête R était conforme auxdites caractéristiques CAR reçues de la base BD et associées dans la base BD au bloc BN d'appartenance du numéro NTEL.

Les vérifications sont mises en oeuvre par des moyens automatiques.

Ainsi que cela est représenté à la figure 4, les caractéristiques CAR de numéros de bloc sont par exemple :
- une fin Eres de période de réservation des numéros de téléphone du bloc BN,
- une date Baff d'affectation des numéros de téléphone du bloc BN (par exemple pour une entreprise),
- une fin Eaff de période d'affectation des numéros de téléphone du bloc BN,
- une longueur Lmax maximum des numéros de téléphone du bloc BN,
- une longueur Lmin minimum des numéros de téléphone du bloc BN,
- une date Batt de début d'attribution d'un bloc BN de numéros de téléphone,
- une date Eatt de fin d'attribution d'un bloc BN de numéros de téléphone,
- un identificateur Op d'opérateur,
- une zone géographique Geo,
- d'autres informations Inf.

La réservation d'une ressource (bloc) dans un plan de numérotation est une décision prise par une autorité administrant ce plan, par exemple une autorité nationale, comme en France l'Autorité de Régulation des Télécommunications (ART), ou internationale, comme l'Union Internationale des Télécommunications (UIT), d'accorder à une entité (opérateur de télécommunication, fournisseur de services, particulier), pendant une durée limitée (jusqu'à Eres), une option sur l'usage à venir de cette ressource de numérotation. Cette ressource ne peut alors être ni réservée, ni attribuée à une autre partie.

L'attribution d'une ressource dans un plan de numérotation est une décision prise par l'autorité administrant ce plan d'accorder à une entité le droit d'utiliser la ressource, de Batt à Eatt.

L'affectation d'une ressource dans un plan de numérotation consiste à sa mise à disposition par l'entité attributaire de cette ressource à un utilisateur final, éventuellement dans le cadre de la fourniture d'un service commercial.

Le numéro NTEL est conforme à Eres, si la date actuelle de la requête R est antérieure à Eres. Le numéro NTEL est conforme à Baff, si la date actuelle de la requête R est postérieure à Baff. Le numéro NTEL est conforme à Eaff, si la date actuelle de la requête R est antérieure à Eaff. Le numéro NTEL est conforme à Lmax si la longueur de NTEL est inférieure ou égale à Lmax. Le numéro NTEL est conforme à Lmin si la longueur de NTEL est supérieure ou égale à Lmin. Le numéro NTEL est conforme à Batt, si la date actuelle de la requête R est postérieure à Batt. Le numéro NTEL est conforme à Eatt, si la date actuelle de la requête R est antérieure à Eatt. La date Baff d'affectation permet de savoir si le numéro NTEL est en circulation ou le sera prochainement.

Par conséquent, une requête R reçue sur les moyens DR le 10 décembre 2003 et contenant un numéro NTEL déterminé par les moyens DC de contrôle comme appartenant au bloc BN = 14528 ne passera pas avec succès ce contrôle, étant donné que cette date est postérieure à Eres = 01/01/2002, ainsi que cela est indiqué à la figure 4, et la requête R correspondante ne sera pas transmise par les moyens DE de la machine H aux serveurs extérieurs 1, 2, 3 de noms de domaine. Par exemple, le message (14) décrit ci-dessous sera émis.

En revanche, une requête R reçue sur les moyens DR le 10 décembre 2003 et contenant un numéro NTEL déterminé par les moyens DC de contrôle comme appartenant au bloc BN = 14529, comme NTEL = 33 145295813, passera pas avec succès ce contrôle car respectant les conditions correspondantes telles qu'elles sont indiquées à la figure 4, et la requête R correspondante sera transmise par les moyens DE de la machine H aux serveurs extérieurs 1, 2, 3 de noms de domaine.

Le ou les plans de numérotation de la base BD de données sont aptes à être mis à jour par tout moyen approprié, en ce qui concerne les blocs BN et chacune des caractéristiques CAR.

Dans un mode de mise en oeuvre, un signal d'erreur sur le numéro de téléphone NTEL de destination de la requête R est renvoyé des moyens DC de contrôle à l'interface utilisateur DP de la machine requérante H, si ce numéro de téléphone NTEL de destination de la requête ne passe pas avec succès ce contrôle préalable, par exemple avec une information sur la ou les caractéristique(s) CAR de numéros de bloc, qui ne sont pas respectées par le numéro de téléphone NTEL de destination de la requête R.

Ces messages d'erreur peuvent être par exemple les suivants :
(1) la longueur du numéro doit être comprise entre « Lmin » et « Lmax »,
(2) le bloc « BN » n'est pas affecté mais est réservé jusqu'à « Eres »,
   (2bis) code réservé mais non affecté,
(3) le bloc n'est pas réservé, ni attribué,
   (3bis) pas de bloc d'appartenance,
(4) le code CC n'est pas attribué,
(5) numéro non ENUM pour un code CC pour lequel un bloc spécifique ENUM a été défini,
(6) format E.164 incorrect (non numérique) : entier de longueur maximum 15 nécessaire,
(7) le code CC est attribué seulement temporairement ou à des fins de test,
(8) le code CC n'est pas référencé dans la librairie de référence de numérotation internationale,
(9) erreur du numéro sur la date Batt de début d'attribution,
(10) erreur du numéro sur la date Eatt de fin d'attribution,
(11) erreur du numéro sur la date Baff de début d'affectation,
(12) bloc non affecté par l'opérateur.

En outre, les caractéristiques CAR peuvent comporter un champ Nat de plan de numérotation, pouvant être soit à Res (réservé), soit à Test (attribué à des fins de test), soit à NA (non affectable), soit à AT, la même valeur du champ Nat étant valable pour un même plan de numérotation, donc pour tous les blocs BN de ce plan de numérotation. Dans ce qui suit, les blocs BN forment, avec leurs caractéristiques CAR associées, codes et champs associés, des lignes dans la base BD, ainsi que cela est représenté à la figure 4.

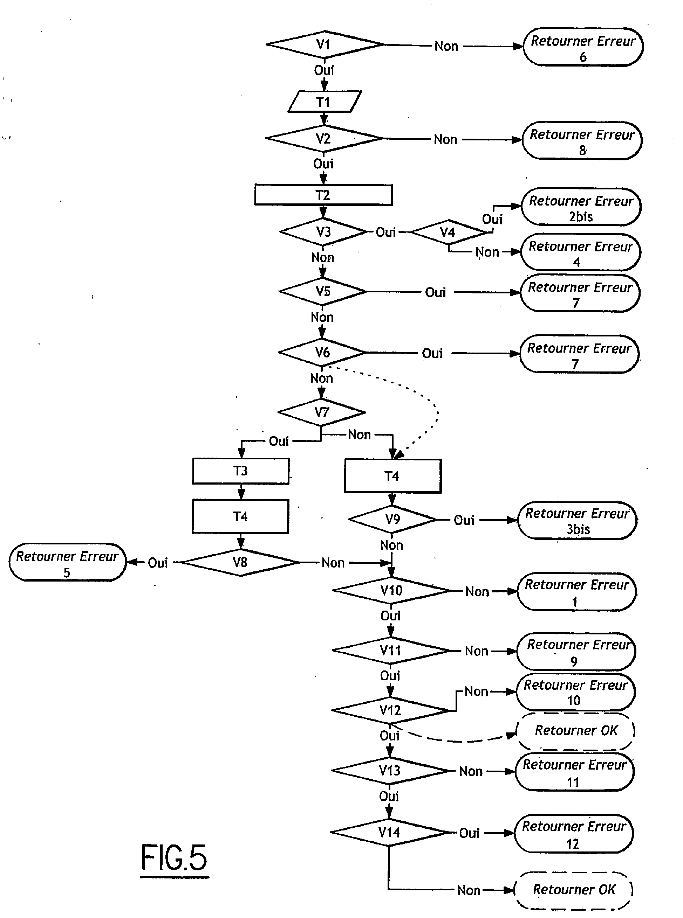

Des vérifications peuvent être effectuées par exemple suivant un premier exemple représenté en traits pleins à la figure 5 et décrit ci-dessous.

Des vérifications peuvent être d'abord effectuées par rapport à des données téléphoniques internationales de la base BD selon les étapes V1, V2, V3, V4, V5, V6 décrites ci-dessous, puis par rapport à des données téléphoniques nationales de la base BD selon les étapes V7, V8, V9, V10, V11, V12 décrites ci-dessous, et ensuite par rapport à des données d'opérateur selon les étapes V13, V14 et suivantes.

Par exemple, on effectue d'abord la vérification V1 du numéro NTEL pour savoir si il a un format numérique et ne commence pas par zéro, pour émettre dans la négative le message (5) et dans l'affirmative passer à la vérification V2 en tenant compte (étape T1) de la base BD complète, appelée également table T pour ce qui est des lignes de la base BD sur lesquelles les vérifications sont effectuées.

Au cours de la vérification V2, on vérifie si il existe au moins une ligne de la base BD, commençant par le code CC de NTEL, pour dans la négative émettre le message (8) et dans l'affirmative passer à la vérification V3 en ne tenant compte (étape T2) que des lignes de la table T qui commencent par le code CC du numéro NTEL (par exemple en supprimant dans la table T toutes les lignes ne commençant pas par CC), pour que la table T ne contienne plus que les lignes d'un même plan de numérotation.

Au cours de la vérification V3, on vérifie si le champ Nat d'un bloc BN de la table T, comme par exemple la première ligne de la table T, est à Res et si il a été déterminé que oui, on teste au cours de la vérification V4 si le champ Eres de cette ligne est renseigné, pour dans l'affirmative, émettre le message (2bis), et, dans la négative, émettre le message (4).

Dans la négative à la vérification V3, on vérifie au cours de la vérification V5 si le champ Nat du bloc BN du numéro NTEL est à Test et si il a été déterminé que oui, on émet le message (7) et si il a été déterminé que non on passe à la vérification V6.

Au cours de la vérification V6, on vérifie si le champ Nat du bloc BN du numéro NTEL est à NA et si il a été déterminé que oui, on émet le message (7) et si il a été déterminé que non on passe à la vérification V7.

Au cours de la vérification V7, on vérifie si le champ Nat du bloc BN du numéro NTEL est à NA et si il a été déterminé que oui, on émet le message (7) et si il a été déterminé que non on passe à la vérification V7.

Dans le premier exemple, la base BD comprend par exemple des plages de numéros (définies par exemple par un ou plusieurs blocs BN) définies comme comprenant des numéros ENUM et d'autres plages de numéros (définies par exemple par un ou plusieurs blocs BN) définies comme ne comprenant pas de numéros ENUM, ainsi que cela est représenté à la figure 4 par le champ « ENUM? » positionné dans BD respectivement à oui ou à non pour ces plages.

Au cours de la vérification V7, on vérifie si il existe dans la table T une ou plusieurs lignes ayant un champ ENUM? à oui. Dans l'affirmative, on ne tient compte au cours de l'étape T3 dans la table T que des lignes dont le champ ENUM? est à oui, c'est-à-dire des lignes de blocs de numéros ENUM (par exemple en supprimant de la table T toutes les lignes ayant un champ ENUM? à non). Puis, on supprime de la table T au cours de l'étape T4 les lignes dont les blocs ne correspondent pas aux premiers chiffres de NTEL, pour sélectionner dans la table T le bloc BN d'appartenance de NTEL selon l'étape E11 décrite ci-dessus. Dans l'affirmative à la vérification V7 et après les étapes T3 et T4, on vérifie au cours de la vérification V8 si la table T est vide, c'est-à-dire n'appartient pas à un bloc BN ENUM, et, dans l'affirmative, on émet le message (5). Le message (5) traduit le fait que le numéro NTEL correspond dans la base BD à une plage de numéros (définie par exemple par un ou plusieurs blocs BN) définie comme ne comprenant pas de numéros ENUM. Dans la négative à la vérification V8, on passe à la vérification V10.

Dans la négative à la vérification V7, on passe à l'étape T4 de sélection du bloc BN d'appartenance du numéro NTEL dans la table T. Puis on effectue la vérification V9 pour déterminer si la table T est vide, c'est-à-dire si il existe un tel bloc BN dans la base BD, et, dans l'affirmative le message (3bis) est émis, tandis que dans la négative, on passe à la vérification V10.

Pour la vérification V10, les étapes E13, E14 et E15 sont exécutées.

La vérification V10 porte sur la conformité du numéro NTEL à Lmin et à Lmax, pour émettre le message (1) dans la négative et passer à la vérification V11 dans l'affirmative.

La vérification V11 porte sur la conformité du numéro NTEL à Batt, pour émettre le message (9) dans la négative et passer à la vérification V12 dans l'affirmative. Le message (9) est émis lorsque, la date Batt de début d'attribution n'est pas renseignée ou est postérieure à la date actuelle à la vérification V11.

La vérification V12 porte sur la conformité du numéro NTEL à Eatt, pour émettre le message (10) dans la négative et passer à la vérification V13 dans l'affirmative. Le message (10) est émis à la vérification V12 lorsque la date Eatt de fin d'attribution est renseignée et est antérieure à la date actuelle.

La vérification V13 porte sur la conformité du numéro NTEL à Baff, pour émettre le message (11) dans la négative et passer à la vérification V14 dans l'affirmative. Si la date Baff de début d'affectation est renseignée et postérieure à la date actuelle, le message (11) est émis à la vérification V13.

La vérification V14 porte sur le point de savoir si la date Baff de début d'affectation est renseignée à 0, pour émettre le message (12) dans la négative.

Bien entendu, d'autres vérifications peuvent être effectuées par rapport à des données d'opérateur, telles que celles ci-dessous.

Un message (13) de tranche dédiée non attribuée est émis lorsque, pour un bloc BN de date Eres de réservation renseignée, la date Eres est antérieure à la date actuelle.

Si la date Eaff de fin d'affectation est renseignée et antérieure à la date actuelle, un message (14) d'erreur du numéro sur la date Eaff de fin d'affectation est émis.

Le message (2) traduit le fait qu'il a été vérifié que le bloc BN du numéro NTEL n'a pas de dates Baff et Eaff mais une date Eres, comme pour le bloc BN = 630 à la figure 4.

Le message (3) traduit le fait qu'il a été vérifié que le bloc BN du numéro NTEL n'a pas de date Eres, ni de dates d'attribution Batt et Eatt, comme pour le bloc 620 à la figure 4.

Dans un deuxième exemple, les vérifications et étapes V7, T3 et V8 ne sont pas exécutées, on passe,s dans la négative à la vérification V6, directement à l'étape T4 suivie de la vérification V9 et les vérifications s'arrêtent à V12, ainsi que cela est représenté en traits interrompus à la figure 5.

Lorsque dans les premier et deuxième exemples, toutes les vérifications ont donné un résultat positif sur le numéro NTEL et qu'aucun message d'erreur n'a été émis, le message OK d'acceptation est émis à l'étape E17.

Les étapes du procédé précédemment décrit sont exécutées par un dispositif informatique, en l'espèce le dispositif d'émission de requêtes à destination du serveur DNS situé dans la machine requérante, sous la commande d'instructions de programme. Par conséquent, l'invention concerne également un programme informatique destiné à être stocké dans ou transmis par un support de données comprenant des instructions de programme pour faire exécuter le procédé par un dispositif informatique. Le support de données peut être un support matériel de stockage, par exemple un CD-ROM, une disquette magnétique ou un disque dur, ou bien un support transmissible tel qu'un signal électrique, optique ou radio.

## Revendications

1. Procédé d'émission d'au moins une requête (R) à destination d'un serveur (1, 2, 3) de noms de domaine depuis une machine requérante (H),
ledit serveur (1, 2, 3) de noms de domaine étant un serveur de noms de domaine de numérotation téléphonique e164.arpa, chaque nom étant déterminé à partir du numéro (NTEL) de téléphone de destination au format E.164, contenu dans ladite requête (R), de la façon suivante : on enlève du numéro de téléphone E.164, qui comprend le code du pays, tous les caractères non numériques, ou intercale des points entre les chiffres, ou inverse l'ordre des chiffres et on ajoute la chaîne «e164.arpa» à la fin des chiffres, le procédé étant
**caractérisé en ce que**
un contrôle préalable de la validité du numéro (NTEL) de téléphone de destination de la requête (R) est exécuté automatiquement et localement à la machine requérante (H) par rapport à une base (BD) de données de numéros de téléphone, locale à la machine requérante (H), pour n'envoyer la requête (R) à partir de la machine requérante (H) à destination du serveur (1, 2, 3) de noms de domaine que si son numéro (NTEL) de téléphone de destination passe avec succès ledit contrôle préalable.

2. Procédé de transmission de requêtes selon la revendication 1, **caractérisé en ce que** dans la base (BD) de données locale est enregistré au moins un code (CC) de pays prescrit, et
le contrôle préalable comprend de vérifier si le code (CC) de pays du numéro (NTEL) de téléphone de destination de la requête (R) en est un enregistré dans la base (BD) de données locale.

3. Procédé de transmission de requêtes selon la revendication 1 ou 2, **caractérisé en ce que** dans la base (BD) locale de données de numéros de téléphone est enregistré au moins un plan de numérotation, chaque plan de numérotation comprenant au moins un bloc (BN) de numéros de téléphone,
le contrôle préalable comprend de :
déterminer, au cours d'une étape (E11) de détermination, si le numéro (NTEL) de téléphone de destination de la requête (R) appartient à un bloc (BN) du plan de numérotation, le numéro (NTEL) de téléphone de destination de la requête (R) ne passant pas avec succès (E12) ledit contrôle préalable dans la négative à l'étape (E11) de détermination.

4. Procédé de transmission de requêtes selon la revendication 3, **caractérisé en ce que** le plan de numérotation est associé à un code (CC) de pays,
le plan de numérotation correspondant au code de pays du numéro (NTEL) de téléphone de destination de la requête (R) étant celui par rapport auquel le contrôle préalable est effectué.

5. Procédé de transmission de requêtes selon la revendication 3 ou 4, **caractérisé en ce qu'**une pluralité de blocs (BN) disjoints de numéros de téléphone, auxquels sont associées respectivement des caractéristiques (CAR) prescrites de numéros du bloc, est enregistrée dans la base (BD) de données locale,
ladite étape de détermination comprend en outre de déterminer (E13), à quel bloc (BN) de numéros de téléphone de la base (BD) de données locale le numéro (NTEL) de téléphone de destination de la requête (R) appartient,
dans le cas où il a été déterminé que le numéro (NTEL) de téléphone de destination de la requête (R) appartient à un bloc (BN) du plan de numérotation,
lire (E14, E15) dans la base (BD) de données locale les caractéristiques (CAR) associées au bloc (BN) de numérotation déterminé,
vérifier (E16) si le numéro (NTEL) de téléphone de destination de la requête (R) est conforme auxdites caractéristiques (CAR) lues,
n'envoyer (E18) de la machine requérante (H) au serveur (1, 2, 3) de noms de domaine la requête (R) que si la vérification donne un résultat affirmatif.

6. Procédé de transmission de requêtes suivant la revendication 5, **caractérisé en ce que**
les caractéristiques (CAR) de numéros de bloc sont au moins l'un parmi :
- une date (Bres) de réservation des numéros de téléphone du bloc,
- une fin (Eres) de période de réservation des numéros de téléphone du bloc,
- une date (Baff) d'affectation des numéros de téléphone du bloc,
- une fin (Eaff) de période d'affectation des numéros de téléphone du bloc,
- une date (Batt) de début d'attribution du bloc (BN) de numéros de téléphone,
- une date (Eatt) de fin d'attribution du bloc (BN) de numéros de téléphone,
- une longueur (Lmax) maximum des numéros de téléphone du bloc,
- une longueur (Lmin) minimum des numéros de téléphone du bloc.

7. Procédé de transmission de requêtes suivant l'une quelconque des revendications précédentes, **caractérisé en ce que** si le numéro (NTEL) de téléphone de destination de la requête (R) ne passe pas avec succès ledit contrôle préalable, un signal d'erreur sur le numéro (NTEL) de téléphone de destination de la requête (R) est renvoyé à la machine requérante (H).

8. Procédé de transmission de requêtes selon la revendication 7 et l'une quelconque des revendications 5 et 6, **caractérisé en ce que** le signal d'erreur sur le numéro de téléphone de destination de la requête (R) contient une information sur la ou les caractéristique(s) (CAR) de numéros de bloc, qui ne sont pas respectées par le numéro (NTEL) de téléphone de destination de la requête (R) lors de ladite vérification (E16).

9. Dispositif d'émission d'au moins une requête (R) à destination d'un serveur (1, 2, 3) de noms de domaine depuis une machine requérante (H),
ledit serveur (1, 2, 3) de noms de domaine étant un serveur de noms de domaine de numérotation téléphonique e164.arpa, chaque nom étant déterminé à partir du numéro (NTEL) de téléphone de destination au format E.164, contenu dans ladite requête (R), de la façon suivante : on enlève du numéro de téléphone E.164, qui comprend le code du pays, tous les caractères non numériques ou intervale des points entre les chiffres, on inverse l'ordre des chiffres et au ajoute la chaîne «e164.arpa» à la fin des chiffres,
**caractérisé en ce que** le dispositif est local à la machine requérante (H) et comporte:
des moyens (DR) de réception de la requête (R) depuis la machine requérante (H),
une base (BD) de données de numéros de téléphone,
des moyens (DC) de contrôle automatique de la validité du numéro (NTEL) de téléphone de destination de la requête (R), présent sur les moyens (DR) de réception par rapport aux données issues de la base (BD) de données de numéros de téléphone, et
des moyens pour n'envoyer la requête (R) de la machine requérante (H) à destination du serveur (1, 2, 3) de noms de domaine que si les moyens (DC) de contrôle ont déterminé que son numéro (NTEL) de téléphone de destination passe avec succès ledit contrôle de validité.

10. Dispositif d'émission selon la revendication 9, **caractérisé en ce que** les moyens (DR) de réception, la base (BD) de données de numéros de téléphone, les moyens (DC) de contrôle automatique et les moyens (DE) d'envoi sont présents sur la machine requérante (H).

11. Dispositif d'émission selon la revendication 10, **caractérisé en ce que** les moyens (DR) de réception, les moyens (DC) de contrôle automatique et les moyens (DE) d'envoi sont présents sur la machine requérante (H) et la base (BD) de données de numéros de téléphone est interrogeable par les moyens (DC) de contrôle automatique par l'intermédiaire d'un réseau local (RL).

12. Machine requérante comprenant un dispositif d'émission d'au moins une requête selon l'une quelconque des revendications 9 à 11.

13. Programme informatique, destiné à être stocké sur un support de données et comportant des instructions de programme pour faire exécuter le procédé d'émission d'au moins une requête selon l'une quelconque des revendications 1 à 8.

14. Système comprenant au moins un serveur (1, 2, 3) de noms de domaine de numérotation téléphonique e164.arpa et une pluralité de machines requérantes (H) selon la revendication 12, aptes à envoyer au moins une requête à destination dudit serveur (1, 2, 3).

## Claims

1. Method of transmitting at least one request (R) to a domain name server (1, 2, 3) from a requesting machine (H),
said domain name server (1, 2, 3) being an e164.arpa telephone numbering domain name server, each name being determined from the destination telephone number (NTEL) in E.164 format, contained in said request (R), as follows: from the E. 164 telephone number, which includes the country code all the non-numeric characters are removed, full stops are inserted between the digits, the order of the digits is reversed and the "e164.arpa" string is added to the end of the digits, the method being **characterized in that**
a prior check on the validity of the destination telephone number (NTEL) of the request (R) is carried out automatically and locally on the requesting machine (H) relative to a telephone number database (BD), local to the requesting machine (H), to send the request (R) from the requesting machine (H) to the domain name server (1, 2, 3) only if its destination telephone number (NTEL) successfully passes said prior check.

2. Method of transmitting requests according to Claim 1, **characterized in that** the local database (BD) stores at least one prescribed country code (CC), and the prior check consists in checking whether the country code (CC) of the destination telephone number (NTEL) of the request (R) is one of those stored in the local database (BD).

3. Method of transmitting requests according to Claim 1 or 2, **characterized in that** the local telephone number database (BD) stores at least one numbering plan, each numbering plan comprising at least one block (BN) of telephone numbers,
the prior check consists in:
determining, during a determination step (E11), whether the destination telephone number (NTEL) of the request (R) belongs to a block (BN) of the numbering plan, the destination telephone number (NTEL) of the request (R) not successfully passing (E12) said prior check otherwise in the determination step (E11).

4. Method of transmitting requests according to Claim 3, **characterized in that** the numbering plan is associated with a country code (CC),
the numbering plan corresponding to the country code of the destination telephone number (NTEL) of the request (R) being that relative to which the prior check is carried out.

5. Method of transmitting requests according to Claim 3 or 4, **characterized in that** a plurality of separate blocks (BN) of telephone numbers, to which are respectively associated prescribed characteristics (CAR) of numbers of the block, are stored in the local database (BD),
said determination step also consists in determining (E13), the block (BN) of telephone numbers in the local database (BD) to which the destination telephone number (NTEL) of the request (R) belongs,
in the case where it has been determined that the destination telephone number (NTEL) of the request (R) belongs to a block (BN) of the numbering plan,
reading (E14, E15) in the local database (BD) the characteristics (CAR) associated with the determined numbering block (BN),
checking (E16) whether the destination telephone number (NTEL) of the request (R) conforms to said read characteristics (CAR),
sending (E18) the request (R) from the requesting machine (H) to the domain name server (1, 2, 3) only if the check gives an affirmative result.

6. Method of transmitting requests according to Claim 5, **characterized in that**
the characteristics (CAR) of block numbers are at least one out of:
- a date (Bres) of reservation of the telephone numbers of the block,
- an end (Eres) of reservation period of the telephone numbers of the block,
- a date (Baff) of assignment of the telephone numbers of the block,
- an end (Eaff) of period of assignment of the telephone numbers of the block,
- a date (Batt) of start of assignment of the block (BN) of telephone numbers,
- a date (Eatt) of end of assignment of the block (BN) of telephone numbers,
- a maximum length (Lmax) of the telephone numbers of the block,
- a minimum length (Lmin) of the telephone numbers of the block.

7. Method of transmitting requests according to any one of the preceding claims, **characterized in that** if the destination telephone number (NTEL) of the request (R) does not successfully pass said prior check, an error signal on the destination telephone number (NTEL) of the request (R) is returned to the requesting machine (H).

8. Method of transmitting requests according to Claim 7 and any one of Claims 5 and 6, **characterized in that** the error signal on the destination telephone number of the request (R) contains information on the block number characteristic or characteristics (CAR) that are not respected by the destination telephone number (NTEL) of the request (R) on said check (E16).

9. Device for transmitting at least one request (R) to a domain name server (1, 2, 3) from a requesting machine (H),
said domain name server (1, 2, 3) being an e164.arpa telephone numbering domain name server, each name being determined from the destination telephone number (NTEL) in E.164 format, contained in said request (R), as follows: from the E.164 telephone number, which includes the country code, all the non-numeric characters are removed, full stops are inserted between the digits, the order of the digits is reversed and the "e164.arpa" string is added to the end of the digits,
**characterized in that** the device is local to the requesting machine (H) and comprises:
means (DR) of receiving the request (R) from the requesting machine (H),
a telephone number database (BD),
means (DC) of automatically checking the validity of the destination telephone number (NTEL) of the request (R), present on the reception means (DR) relative to the data obtained from the telephone number database (BD), and
means for sending the request (R) from the requesting machine (H) to the domain name server (1, 2, 3) only if the checking means (DC) have determined that its destination telephone number (NTEL) successfully passes said validity check.

10. Transmission device according to Claim 9, **characterized in that** the reception means (DR), the telephone number database (BD), the automatic checking means (DC) and the sending means (DE) are present on the requesting machine (H).

11. Transmission device according to Claim 10, **characterized in that** the reception means (DR), the automatic checking means (DC) and the sending means (DE) are present on the requesting machine (H) and the telephone number database (BD) can be interrogated by the automatic checking means (DC) via a local area network (RL).

12. Requesting machine comprising a device for transmitting at least one request according to any one of Claims 9 to 11.

13. Computer program, designed to be stored on a data medium and comprising program instructions for executing the method of transmitting at least one request according to any one of Claims 1 to 8.

14. System comprising at least one e164.arpa telephone numbering domain name server (1, 2, 3) and a plurality of requesting machines (H) according to Claim 12, capable of sending at least one request to said server (1, 2, 3).

## Patentansprüche

1. Verfahren zum Senden mindestens einer Anfrage (R) an einen Domainnamenserver (1, 2, 3) ausgehend von einer anfragenden Maschine (H),
wobei der Domainnamenserver (1, 2, 3) ein Rufnummerwähl-Domainnamenserver e164.arpa ist,
wobei jeder Name ausgehend von der Zielrufnummer (NETL) im Format E. 164, die in der Anfrage (R) enthalten ist, wie folgt bestimmt wird: Man entfernt von der Rufnummer E.164, die die Landesvorwahl enthält, alle Zeichen, die keine Ziffern sind, man fügt Punkte zwischen die Ziffern ein, man kehrt die Reihenfolge der Ziffern um und man fügt die Kette "e164.arpa" am Ende der Ziffern hinzu,
**dadurch gekennzeichnet,**
**dass** automatisch und lokal an der anfragenden Maschine (H) in Bezug auf eine Datenbank (BD) von Rufnummern, die für die anfragende Maschine (H) lokal ist, eine Vorabprüfung der Gültigkeit der Zielrufnummer (NTEL) der Anfrage durchgeführt wird, um die Anfrage (R) ausgehend von der anfragenden Maschine (H) nur zu dem Domainnamenserver (1, 2, 3) zu senden, wenn ihre Zielrufnummer (NTEL) die Vorabprüfung besteht.

2. Verfahren zum Übertragen von Anfragen nach Anspruch 1, **dadurch gekennzeichnet, dass** in der lokalen Datenbank (BD) mindestens eine vorgeschriebene Landesvorwahl (CC) registriert ist, und
dass bei der Vorabprüfung geprüft wird, ob die Landesvorwahl (CC) der Zielrufnummer (NTEL) der Anfrage (R) in der lokalen Datenbank (BD) registriert ist.

3. Verfahren zum Übertragen von Anfragen nach Anspruch 1 oder 2, **dadurch gekennzeichnet, dass** in der lokalen Rufnummerndatenbank (BD) mindestens ein Wählplan registriert ist, wobei jeder Wählplan mindestens einen Block (BN) Rufnummern aufweist,
wobei das Vorabprüfen Folgendes aufweist:
im Laufe eines Bestimmungsschritts (E11) Bestimmen, ob die Zielrufnummer (NTEL) der Anfrage (R) zu einem Block (BN) des Wählplans gehört, wobei die Zielrufnummer (NTEL) der Anfrage (R) die Vorabprüfung bei negativer Reaktion auf den Bestimmungsschritt (E11) nicht besteht (E12).

4. Verfahren zum Übertragen von Anfragen nach Anspruch 3, **dadurch gekennzeichnet, dass** der Wählplan mit einer Landesvorwahl (CC) verbunden ist,
wobei der Wählplan, der der Landesvorwahl der Zielrufnummer (NTEL) der Anfrage (R) entspricht, der ist, zu dem die Vorabprüfung erfolgt.

5. Verfahren zum Übertragen von Anfragen nach Anspruch 3 oder 4, **dadurch gekennzeichnet, dass** mehrere getrennte Blöcke (BN) von Rufnummern, mit welchen jeweils vorgeschriebene Charakteristiken (CAR) von Blocknummern verbunden sind, in der lokalen Datenbank (BD) registriert sind,
wobei der Schritt des Bestimmens ferner das Bestimmen (E13) aufweist, zu welchem Rufnummernblock (BN) der lokalen Datenbank (BD) die Zielrufnummer (NTEL) der Anfrage (R) gehört,
wenn bestimmt wurde, dass die Zielrufnummer (NTEL) der Anfrage (R) zu einem Block (BN) des Wählplans gehört,
Lesen (E14, E15) der Charakteristiken (CAR) die zu dem bestimmten Nummerierungsblock (BN) gehören, in der lokalen Datenbank,
Prüfen (E16), ob die Zielrufnummer (NTEL) der Anfrage (R) den gelesenen Charakteristiken (CAR) entspricht,
nur Versenden (E18) der Anfrage (R) von der anfragenden Maschine (H) an den Domainnamenserver (1, 2, 3), wenn die Prüfung ein positives Resultat ergibt.

6. Verfahren zum Übertragen von Anfragen nach Anspruch 5, **dadurch gekennzeichnet, dass**
die Charakteristiken (CAR) von Blocknummern mindestens eins der Folgenden sind:
- ein Reservierungsdatum (Bres) von Rufnummern des Blocks,
- ein Reservierungsperiodenende (Eres) der Rufnummern des Blocks,
- ein Zuweisungsdatum (Baff) der Rufnummern des Blocks,
- ein Zuweisungsperiodenende (Eaff) der Rufnummern des Blocks,
- ein Zuweisungsanfangsdatum (Batt) des Rufnummernblocks (BN),
- ein Zuweisungsenddatum (Eatt) des Rufnummernblocks (BN),
- eine maximale Länge (Lmax) der Rufnummern des Blocks,
- eine Mindestlänge (Lmin) der Rufnummern des Blocks.

7. Verfahren zum Übertragen von Anfragen gemäß einem der vorhergehenden Ansprüche, **dadurch gekennzeichnet, dass**, wenn die Zielrufnummer (NTEL) der Anfrage (R) die Vorabprüfung nicht besteht, ein Fehlersignal zu der Zieltelefonrufnummer (NTEL) der Anfrage (R) an die anfragende Maschine (H) zurückgesendet wird.

8. Verfahren zum Übertragen von Anfragen nach Anspruch 7 und einem der Ansprüche 5 und 6, **dadurch gekennzeichnet, dass** das Fehlersignal zu der Zielrufnummer der Anfrage (R) eine Information über das oder die Charakteristiken (CAR) von Blocknummern enthält, die von der Zielrufnummer (NTEL) der Anfrage (R) bei der Prüfung (E16) nicht eingehalten werden.

9. Vorrichtung zum Senden mindestens einer Anfrage (R) zu einem Domainnamenserver (1, 2, 3) ausgehend von einer anfragenden Maschine (H),
wobei der Domainnamenserver (1, 2, 3) ein Rufnummerwähl-Domainnamenserver e164.arpa ist, wobei jeder Name ausgehend von der Zielrufnummer (NTEL) im Format E.164, das in der Anfrage (R) enthalten ist, wie folgt bestimmt wird: Man entfernt aus der Rufnummer E.164, die die Landesvorwahl aufweist, alle Zeichen, die keine Ziffern sind, man fügt Punkte zwischen die Ziffern ein, man kehrt die Reihenfolge der Ziffern um und man fügt die Kette "e164.arpa" am Ende der Ziffern hinzu,
**dadurch gekennzeichnet, dass** die Vorrichtung ortsgleich mit der anfragenden Maschine (H) ist und Folgendes aufweist:
Empfangsmittel (DR) für die Anfrage (R) von der anfragenden Maschine (H),
eine Rufnummerndatenbank (BD),
automatische Mittel (DC) zum Prüfen der Gültigkeit der Zielrufnummer (NTEL) der Anfrage (R), die auf den Empfangsmitteln (DR) gegenwärtig ist, in Bezug auf Daten, die aus der Rufnummerndatenbank (BD) stammen, und
Mittel, um die Anfrage (R) der anfragenden Maschine (H) nur zu dem Domainnamenserver (1, 2, 3) zu senden, wenn die Prüfmittel (DC) bestimmt haben, dass ihre Zielrufnummer die Gültigkeitsprüfung besteht.

10. Sendevorrichtung nach Anspruch 9, **dadurch gekennzeichnet, dass** die Empfangsmittel (DR), die Rufnummerndatenbank (BD), die automatischen Prüfmittel (DC) und die Sendemittel (DE) auf der anfragenden Maschine (H) gegenwärtig sind.

11. Sendevorrichtung nach Anspruch 10, **dadurch gekennzeichnet, dass** die Empfangsmittel (DR), die automatischen Prüfmittel (DC) und die Sendemittel (DE) auf der anfragenden Maschine (H) gegenwärtig sind, und dass die Rufnummerndatenbank (BD) von den automatischen Prüfmitteln (DC) über ein lokales Netzwerk (RL) abgefragt werden kann.

12. Anfragende Maschine, die eine Sendevorrichtung für mindestens eine Anfrage nach einem der Ansprüche 9 bis 11 aufweist.

13. EDV-Programm, das dazu bestimmt ist, auf einem Datenträger gespeichert zu werden, und das Programmanweisungen enthält, um das Sendeverfahren für mindestens eine Anfrage nach einem der Ansprüche 1 bis 8 ausführen zu lassen.

14. System, das mindestens einen Rufnummer-Domainnamenserver e164.arpa und mehrere anfragende Maschinen (H) nach Anspruch 12 aufweist, die mindestens eine Anfrage an den Server (1, 2, 3) senden können.
